# EUROPÄISCHE PATENTSCHRIFT

(11) **EP 3 837 112 B1**
(45) Veröffentlichungstag und Bekanntmachung des Hinweises auf die Patenterteilung: **25.10.2023**
(21) Anmeldenummer: 19755581.6
(22) Anmeldetag: 13.08.2019
(51) Int. Cl.: B32B 27/20, B32B 37/00, E04F 15/00

(54) **MULTILAMINARE KUNSTSTOFFTRÄGERPLATTE UND VERFAHREN ZU DEREN HERSTELLUNG**
MULTILAMINAR PLASTIC CARRIER PLATE AND METHOD FOR THE PRODUCTION THEREOF
PLAQUE SUPPORT EN PLASTIQUE MULTILAMINAIRE ET SON PROCEDE DE PRODUCTION

(30) Priorität: 14.08.2018 DE 102018119766
(43) Veröffentlichungstag der Anmeldung: 23.06.2021
(73) Patentinhaber: Akzenta Paneele + Profile GmbH, 56759 Kaisersesch (DE)
(72) Erfinder: HANNIG, Hans-Jürgen, 51427 Bergisch Gladbach (DE); HÜLLENKREMER, Felix, 56076 Koblenz (DE)
(74) Vertreter: Michalski Hüttermann & Partner Patentanwälte mbB
(86) Internationale Anmeldenummer: PCT/EP2019/071762
(87) Internationale Veröffentlichungsnummer: WO 2020/035511

(56) Entgegenhaltungen:
- EP-A1- 3 037 276
- KR-A- 20130 078 581

## Beschreibung

Die vorliegende Erfindung betrifft eine multilaminare Kunststoffträgerplatte sowie ein Verfahren zu deren Herstellung. Insbesondere betrifft die vorliegende Erfindung eine multilaminare Kunststoffträgerplatte zur Herstellung von dekorativen Wand-, Decken- und Bodenpaneelen sowie ein Verfahren zur Herstellung solcher dekorativen Paneele.

Dekorierte Paneele sind an sich bekannt, wobei unter dem Begriff Wandpaneel auch Paneele zu verstehen sind, die zur Decken- oder Türbekleidung geeignet sind. Sie bestehen üblicherweise aus einem Träger beziehungsweise Kern aus einem festen Material, beispielsweise einem Holzwerkstoff, wie beispielweise eine mitteldichte Faserplatte (MDF) oder hochdichte Faserplatte (HDF, einem Holz-Kunststoff-Kompositwerkstoff (WPC) oder einem Mineral-Kunststoff-Kompositwerkstoff (MPC), der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Im Fall von MDF- oder HDF-Trägern ist die Dekorschicht üblicherweise auf einem auf den Träger angeordneten Druckuntergrund aufgebracht, der beispielsweise aus einer Papierschicht gebildet seien kann. Dabei ist es bekannt, die Dekorschicht bereits vor dem Aufbringen der Papierschicht auf den Träger auf die Papierschicht aufzudrucken oder auch eine zunächst unbedruckte Papierschicht auf den Träger aufzubringen und die Dekorschicht anschließend mittels sogenannter Direktdruckverfahren auf die Papierschicht aufzubringen. Im Fall von auf Kunststoff-Kompositwerkstoffen beruhenden Trägern ist es bekannt, diese nach ggf. aufbringen eines Druckuntergrundes im Direktdruckverfahren mit einem Dekor zu versehen.

Ein Nachteil der auf Holzwerkstoffen beruhenden Träger ist oftmals die nur beschränkte Feuchtigkeitsresistenz der resultierenden Dekorpaneele, wodurch der Einsatzbereich dieser Paneele beschränkt ist. In den letzten Jahren sind daher vermehrt kunststoffbasierte Träger entwickelt worden, um den Anwendungsbereich entsprechender Dekorpaneele zu erweitern. Gerade im Bereich der kunststoffbasierten Träger besteht jedoch noch Entwicklungspotential um diese in ökologischer wie ökonomischer Hinsicht zu verbessern.

EP2 757 129 A1 offenbart ein Dekorpaneel welches einen plattenförmige Träger aufweist, der zumindest teilweise aus einer mit einem Elastomerpulver modifizierten thermoplastischen Zusammensetzung gefertigt ist. Das vorgeschlagene Dekorpaneel weist zumindest einen plattenförmigen Träger und eine darauf angeordnete Dekorschicht, wobei der plattenförmige Träger zumindest teilweise aus einer mittels Schmelzmischen mit einem Elastomerpulver modifizierten thermoplastischen Zusammensetzung mit mindestens einem thermoplastischen Matrixmaterial und mindestens einem in das Matrixmaterial in gebundenen feinteiligen, vernetzten und pulverförmigen Elastomermaterial gefertigt ist.

WO 2014/029887 A1 offenbart ein Verfahren zur Herstellung eines dekorierten Wand- oder Bodenpaneels, aufweisend die Verfahrensschritte a) Bereitstellen eines plattenförmigen Trägers, b) Aufbringen eines Primer zumindest auf die zu bedruckend Oberfläche des plattenförmigen Trägers, c) Aufbringen eines Dekors mittels bedrucken zumindest eines Teils der mit dem Primer behandelten Oberfläche, welches dadurch gekennzeichnet ist, dass als Primer eine flüssige strahlungshärtbare Mischung auf Basis eines Urethanacrylates eingesetzt wird.

EP 2 942 208 A1 offenbart ein Verfahren zur Herstellung eines dekorierten Wand- oder Bodenpaneels vor, aufweisend die Verfahrensschritte: a) Bereitstellen eines schüttfähigen Trägermaterials, insbesondere eines Granulats, b) Anordnen des Trägermaterials zwischen zwei bandartigen Fördermitteln, c) Formen des Trägermaterials unter Einwirkung von Temperatur unter Ausbildung eines bahnförmigen Trägers, d) Komprimieren des Trägers, e) Behandeln des Trägers unter Einwirkung von Druck unter Verwendung einer Zweibandpresse, wobei der Träger in oder vor der Zweibandpresse gekühlt wird; f) gegebenenfalls weiteres Abkühlen des Trägers, g) gegebenenfalls Aufbringen eines Dekoruntergrunds auf zumindest einen Teilbereich des Trägers; h) Aufbringen eines eine Dekorvorlage nachbildenden Dekors auf zumindest einen Teilbereich des Trägers, i) Aufbringen einer Schutzschicht auf zumindest einen Teilbereich des Dekors, j) gegebenenfalls Strukturieren der Schutzschicht zum Einfügen von Poren und/oder des Randbereichs des Trägers zum Ausbilden von Verbindungselementen, und k) gegebenenfalls Behandeln des Trägers zur elektrostatischen Entladung vor einem der vorgenannten Verfahrensschritte.

EP 3 088 204 A1 offenbart ein Verfahren zur Herstellung eines dekorierten Wand- oder Bodenpaneels vor, aufweisend die Verfahrensschritte: a) Bereitstellen eines schüttfähigen Trägermaterials, insbesondere eines Granulats, b) Anordnen des Trägermaterials zwischen zwei bandartigen Fördermitteln, c) Formen des Trägermaterials unter Einwirkung von Temperatur unter Ausbildung eines bahnförmigen Trägers, d) Komprimieren des Trägers, e) Behandeln des Trägers unter Einwirkung von Druck unter Verwendung einer Zweibandpresse, wobei der Träger in oder vor der Zweibandpresse gekühlt wird; f) gegebenenfalls weiteres Abkühlen des Trägers, g) gegebenenfalls Aufbringen eines Dekoruntergrunds auf zumindest einen Teilbereich des Trägers; h) Aufbringen eines eine Dekorvorlage nachbildenden Dekors auf zumindest einen Teilbereich des Trägers, i) Aufbringen einer Schutzschicht auf zumindest einen Teilbereich des Dekors, wobei j) vor dem Anordnen des Trägermaterials zwischen zwei bandartigen Fördermitteln gemäß Verfahrensschritt b) eine Folie aus einem feuchtigkeitshemmenden Material unter oder auf dem Trägermaterial angeordnet wird.

Die EP 3 037 276 A1 offenbart ein Dekorpaneel, welches eine Schichtfolge A-B-A aufweist, wobei A ein Glykol-modifiziertes PET enthalten und B eine Mischung aus Glykolmodifiziertem PET, PET und einem Polyester enthalten kann.

Die KR 2013 0078581 A offenbart ein Dekorpaneel, welches eine Schichtfolge A-B-A aufweist, wobei A ein Glykol-modifiziertes PET und B ein amorphes PET enthalten kann.

Es ist die Aufgabe der vorliegenden Erfindung, ein verbessertes kunststoffbasiertes Trägermaterial vorzuschlagen, welches sich insbesondere zur Herstellung von dekorierten Wand-, Decken und Bodenpaneelen eignet.

Gelöst wird diese Aufgabe durch ein multilaminares Kunststoffträgermaterial gemäß Anspruch 1. Gelöst wird diese Aufgabe ferner durch ein Verfahren gemäß Anspruch 9 sowie durch ein Dekorpaneel gemäß Anspruch 14. Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt. Insbesondere können die nachstehend genannten Mengenangaben und Eigenschaften der jeweiligen Materialien beziehungsweise Substanzen beliebig mit einander kombiniert werden. Mit der Erfindung wird ein multilaminares Kunststoffträgermaterial vorgeschlagen, welches eine Mehrzahl N von Schichtfolgen A-B-A aufweist, wobei Schicht A einen ersten thermoplastischen Kunststoff aufweist und Schicht B einen zweiten thermoplastischen Kunststoff aufweist und wobei der erste thermoplastische Kunststoff ein virginaler Kunststoff ist und der zweite Kunststoff ein rezyklierter Kunststoff ist, und wobei 250 ≥ N ≥ 2, vorzugsweise 200 ≥ N ≥ 3, vorzugsweise 125 ≥ N ≥ 4, noch bevorzugter 100 ≥ N ≥ 5.

Es konnte in überraschender Weise gezeigt werden, dass ein derartiges Kunststoffträgermaterial das Herstellen eines Wand-, Decken oder Bodenpaneels mit einer verbesserten Feuchteresistenz ermöglicht, insbesondere mit einer reduzierten feuchte- oder hitzebedingten Quellung sowie mit guten mechanischen Eigenschaften und einer verbesserten Bearbeitbarkeit. Darüber hinaus ist das erfindungsgemäße Kunststoffträgermaterial ökologisch vorteilhaft, da es zu einem deutlichen Anteil aus rezyklierten Kunststoff gefertigt werden kann und somit ressourcenschonend ist.

Unter dem Begriff "dekoriertes Wand- oder Bodenpaneel" beziehungsweise "Dekorpaneel" sind im Sinne der Erfindung insbesondere Wand-, Decken, Tür- oder Bodenpaneele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter einem "schüttfähigen" Material kann insbesondere ein Material verstanden werden, welches durch einen Schüttvorgang beziehungsweise Streuvorgang auf eine Unterlage aufgebracht werden kann. Dabei kann das Material als Fluid vorliegen oder insbesondere als schüttfähiger Feststoff.

Ferner kann unter einem "Granulat" beziehungsweise einem "granularen Material" ein Feststoff beziehungsweise ein Haufwerk eines Feststoffs verstanden werden, welcher eine Vielzahl fester Partikel, wie etwa Körner oder Kugeln, umfasst beziehungsweise daraus besteht. Beispielhaft aber nicht abschließend seien hier körnige oder pulverförmige Materialien genannt.

Unter einem "Träger" kann insbesondere eine in einem fertig gestellten Paneel als Kern beziehungsweise als Basislage dienende Lage verstanden werden, die insbesondere einen Naturstoff, wie etwa einen Holzwerkstoff, einen Faserwerkstoff oder einen Werkstoff umfassend einen Kunststoff aufweisen kann. Beispielsweise kann der Träger dem Paneel bereits eine geeignete Stabilität verleihen oder zu dieser beitragen.

Entsprechend kann unter einem Trägermaterial ein derartiges Material verstanden werden, welches den Träger zumindest zu einem mehrwiegenden Teil bildet. Insbesondere kann der Träger aus dem Trägermaterial bestehen.

Unter einem "bahnartigen Träger" kann dabei ein Träger verstanden werden, der etwa in seinem Herstellungsprozess eine bahnartige und damit im Vergleich zu seiner Dicke beziehungsweise Breite deutlich größere Länge aufweist und deren Länge beispielsweise größer als 15 Meter betragen kann.

Unter einem "plattenförmigen Träger" kann dabei ferner im Sinne der vorliegenden Erfindung ein Träger verstanden werden, der durch Vereinzelung aus dem bahnartigen Träger geformt ist und in der Form einer Platte ausgebildet ist. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendlichen Dekorpaneele um ein mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

Ein vorbeschriebenes Trägermaterial dient somit insbesondere der Herstellung eines Trägers für ein dekoriertes Wand- oder Bodenpaneel. Das Trägermaterial weist im Wesentlichen zwei Materialen auf, wobei unter einem Material im Sinne der vorliegenden Erfindung sowohl ein homogenes Material, also ein aus nur einer Substanz ausgebildetes Material, wie auch ein heterogenes Material, also ein aus wenigstens zwei Substanzen bestehendes Material, verstanden werden kann, wobei das aus wenigstens zwei Substanzen bestehende Material somit auch als Substanzmischung verstanden werden kann.

Gemäß einer Ausgestaltung der Erfindung weisen die Schichten A und B jeweils eine Schichtdicke zwischen 100 µm und 2000 µm auf. Dabei kann es vorgesehen sein, dass die Schichtdicke der Schicht A verschieden ist von der Schichtdicke der Schicht B. So kann es beispielsweise vorgesehen sein, dass die Schicht B eine Schichtdicke aufweist, die ≥100% bis ≤ 3 000% der Schichtdicke der Schicht A entspricht. In einer weiteren Ausgestaltung kann es vorgesehen sein, dass die Schichtdicke der Schicht A eine Schichtdicke aufweist, die ≥100% bis ≤1000% der Schichtdicke der Schicht B entspricht. In einer weiteren Ausgestaltung der Erfindung kann es vorgesehen sein, dass die Schichtdicke der beiden Schichten A unterschiedlich zueinander sind.

Gemäß einer weiteren Ausgestaltung der Erfindung kann es vorgesehen sein, dass der rezyklierte thermoplastische Kunststoff der Schicht B ein amorphes Polyethylenterephthalat (PET) aufweist. Polyethylenterephthalat (PET) fällt in großen Mengen in der Verpackungsindustrie an, wo es insbesondere für Lebensmittelverpackungen und Getränkeflaschen Einsatz findet. Da im Bereich der Lebensmittelverpackung höchste Standards einzuhalten sind, ist ein Recycling von PET in der Regel nur begrenzt möglich. Auch trotz der inzwischen verfügbaren Recyclingverfahren wie z.B. das URRC-Verfahren (United Resource Recovery Corporation) werden große Mengen PET nicht ortsnah rezykliert, sondern zur Herstellung von Kunstfasern exportiert. Das erfindungsgemäße Verfahren biete hier eine weitere Verwendungsmöglichkeit für rezykliertes PET.

Vorzugsweise kann der Anteil an rezykliertem Polyethylenterephthalat in der Schicht B in einem Bereich zwischen ≥10 Gew.-% und ≤100 Gew.-% bezogen auf den Polymeranteil der Schicht B liegen. Besonders bevorzugt kann der Anteil an rezykliertem Polyethylenterephthalat in der Schicht B in einem Bereich zwischen ≥15 Gew.-% und ≤90 Gew.-%, ≥20 Gew.-% und ≤80 Gew.-% insbesondere bezogen auf den Polymeranteil der Schicht B liegen.

Neben dem rezykliertem Polyethylenterephthalat kann in der Schicht B ein virginales Polyethylenterephthalat vorgesehen sein. Der Anteil an virginalem PET kann dabei in einem Bereich zwischen ≥0 Gew.-% und ≤90 Gew.-% bezogen auf den Polymeranteil der Schicht B liegen. Besonders bevorzugt kann der Anteil an virginalem Polyethylenterephthalat in der Schicht B in einem Bereich zwischen ≥10 Gew.-% und ≤80 Gew.-%, ≥15 Gew.-% und ≤75 Gew.-% insbesondere bezogen auf den Polymeranteil der Schicht B liegen. Durch das Vorsehen von virginalem PET in der Schicht B kann eine verbesserte Anbindung an die Schichten A erreicht werden.

Gemäß einer weiteren Ausgestaltung der Erfindung kann es vorgesehen sein, dass das Schicht B neben dem thermoplastischen Kunststoff einen Füllstoff aufweist, wobei der Füllstoff vorzugsweise ausgewählt ist aus der Gruppe bestehend aus Kreide, nicht asbestöses Silikat, vorzugsweise Magnesiumsilikat, Holzmehl, Blähton, Vulkanasche, Bims, Porenbeton, insbesondere anorganischen Schäumen, Cellulose oder ein Blähmittel aufweist.

Vorzugsweise kann der Anteil an Füllstoff in einem Bereich zwischen ≥1 Gew.-% und ≤60 Gew.-%, insbesondere in einem Bereich zwischen ≥5 Gew.-% und ≤50 Gew.-% bezogen auf die Gesamtmasse des die Schicht B bildenden Materials liegen.

In vorteilhafter Weise ist es durch den Zusatz von Füllstoffen möglich, die Materialeigenschaften des multilaminaren Kunststoffträgermaterials wie beispielsweise dessen spezifisches Gewicht, oder auch dessen Heizwert einzustellen. Letzteres ist insbesondere für die Frage der durch einen auf Basis eines entsprechenden multilaminaren Kunststoffträgers gebildeten Wand-, Decken- oder Bodenbelages und die durch einen solchen in ein Gebäude eingebrachte Brandlast relevant. Allgemein können in Abhängigkeit des gewünschten Anwendungsgebietes und der gewünschten Eigenschaften eines auf Basis eines erfindungsgemäßen multilaminaren Kunststoffträgermaterials gebildeten Paneels die Anteile an thermoplastischem Kunststoffmaterial beziehungsweise Füllstoffmaterial wählbar sein. Dadurch kann eine gute Adaptierbarkeit an das gewünschte Anwendungsgebiet möglich werden.

Besonders bevorzugt kann es vorgesehen sein, dass als Füllstoff in der Schicht B ein Schichtsilikat, wie beispielsweise Talkum, vorgesehen wird. Unter Talkum wird dabei in an sich bekannter Weise ein Magnesiumsilikathydrat verstanden, welches beispielsweise die chemische Summenformel Mg₃[Si₄O₁₀(OH)₂] aufweisen kann. Somit ist der Feststoffanteil vorteilhafter Weise zumindest durch einen Großteil aus dem mineralischen Stoff Talkum gebildet, wobei dieser Stoff etwa als Pulverform eingesetzt werden kann beziehungsweise in dem Trägermaterial in Form von Partikeln vorliegen kann. Grundsätzlich kann das Feststoffmaterial aus einem pulverförmigen Feststoff bestehen.

Vorteilhaft kann es sein, wenn die spezifische Oberflächendichte nach BET, ISO 4652 der Talkum-Partikel in einem Bereich liegt von ≥ 4 m²/g bis ≤ 8 m²/g, etwa in einem Bereich von ≥ 5 m²/g bis ≤ 7 m²/g.

Weiterhin kann es vorteilhaft sein, wenn das Talkum bei einer Schüttdichte nach DIN 53468 vorliegt in einem Bereich von ≥ 0,15 g/cm³ bis ≤ 0,45 g/cm³, etwa in einem Bereich von ≥ 0,25 g/cm³ bis ≤ 0,35 g/cm³.

Mit Bezug auf das die Schicht B bildende Material kann es weiterhin vorgesehen sein, dass das thermoplastische Kunststoffmaterial und der Füllstoff gemeinsam, bezogen auf das das die Schicht B bildende Material insgesamt, in einer Menge von ≥ 95 Gew.-%, insbesondere ≥ 99 Gew.-%, vorliegen. In anderen Worten kann es vorgesehen sein, dass neben dem thermoplastischen Kunststoffmaterial und dem Füllstoff in dem die Schicht B bildenden Material weitere Substanzen lediglich in einem Anteil, bezogen auf das die Schicht B bildende Material, von < 5 Gew.-%, vorzugsweise von < 1 Gew.-% vorliegen. Somit kann es vorteilhaft sein, dass das die Schicht B bildende Material zu einem Großteil aus thermoplastischen Kunststoff und einem oder mehreren Füllstoffen besteht.

Darüber hinaus kann es vorgesehen sein, dass thermoplastische Kunststoffmaterial der Schicht B weitere Bestandteile wie beispielsweise Flexibilisatoren, Pigmente, Stabilisatoren, Schlagzähigkeitsmodifikatoren, Netzmittel- und/oder Dispergieradditive aufweist.

Sofern Pigmente als weitere Bestandteile vorgesehen sind ist es von Vorteil, wenn die Farbpigmente dabei kein Blei und/oder Cadmium enthalten. Verwendete Farbpigmente können zum Beispiel Kupfer-Phtalocyanin, Chinacridon und/oder Diketopyrrolopyrrol aufweisen. Dadurch kann erreicht werden, dass das Trägermaterial umweltschonend rezykliert werden kann.

Gemäß einer Ausgestaltung der Erfindung kann das recycelte PET (rPET) einen Vicat Erweichungspunkt zwischen ≥70°C und ≤80°C, beispielsweise bei 75°C aufweisen.

Weiterhin kann es vorgesehen sein, dass das recycelte PET (rPET) einen Melting Flow Index (MFI) zwischen ≥40 g/10min und ≤60 g/10min, wie beispielsweise 49 g/10min aufweist.

Weiterhin kann es vorgesehen sein, dass die Wärmeformbeständigkeit (Methode A: 1,82MPa) des rPET in einem Bereich von ≥63°C und ≤83°C, wie beispielsweise bei 73°C liegt.

Das rPET kann gemäß einer Ausgestaltung der Erfindung eine Zugfestigkeit zwischen ≥50 MPa und ≤70 MPa, wie beispielsweise von 60 MPa aufweisen.

Das rPET kann gemäß einer Ausgestaltung der Erfindung einen Zugmodul in einem Bereich von ≥1500 MPa bis ≤2500 MPa, wie beispielsweise von 2000 MPa aufweisen.

Des Weiteren kann die Reißdehnung des rPET gemäß einer Ausgestaltung der Erfindung in einem Bereich zwischen ≥7,0% und ≤12.0%, wie beispielsweise bei 9,2% liegen.

Gemäß einer Ausgestaltung der Erfindung kann das rPET eine Charpy Schlagzähigkeit in einem Bereich zwischen ≥20 kJ/m² und ≤40 KJ/m², wie beispielsweise von 30 KJ/m² erreichen.

Gemäß einer weiteren Ausgestaltung der Erfindung kann das Material der Schicht B soweit es eine Mischung aus rezykliertem PET und Talkum aufweist einen Vicat Erweichungspunkt in einem Bereich zwischen ≥70°C und ≤90°C, beispielsweise bei 83°C aufweisen. Die Wärmeformbeständigkeit (A-1,82MPa) eines solchen Materials kann gemäß einer weiteren Ausgestaltung in einem Bereich zwischen ≥70°C und ≤90°C, wie beispielsweise bei 80 °C liegen. Die Zugfestigkeit eines solchen Materials kann gemäß einer weiteren Ausgestaltung in einem Bereich zwischen ≥35 MPa und ≤55 MPa, wie beispielsweise bei 45 MPa liegen. Der Zugmodul eines solchen Materials kann gemäß einer weiteren Ausgestaltung in einem Bereich zwischen ≥1800 MPa und ≤2500 MPa, wie beispielsweise 2100 MPa liegen. Die Reißdehnung eines solchen Materials kann gemäß einer weiteren Ausgestaltung in einem Bereich zwischen ≥2% und ≤10% liegen und beispielsweise 4% betragen. Die Charpy Schlagzähigkeit eines solchen Materials kann gemäß einer weiteren Ausgestaltung in einem Bereich zwischen ≥5 KJ/m² und ≤20 KJ/m² liegen, beispielsweise bei 10 KJ/m².

Erfindungsgemäß kann es des Weiteren vorgesehen sein, dass unterschiedliche A-B-A Folienschichten übereinander angeordnet sind, welche sich zwar in der Art des thermoplastischen Kunststoffs des Typs A gleichen, jedoch beispielsweise in der Ausgestaltung der Schicht B unterscheiden. So kann es beispielsweise vorgesehen sein, dass innerhalb des Folienstapels eine zentrale Folie des Typs A-B-A vorgesehen ist, bei welcher die Schicht B einen hohen Anteil eines Füllstoffes aufweist, wie beispielsweise 50 Gew.-% bezogen auf die Gesamtmasse der Schicht B, während die oberhalb und/oder unterhalb dieser A-B-A Folienschicht angeordneten A-B-A Folienschichten einen geringeren Füllstoffanteil in der Schicht B, wie beispielsweise 15 Gew.-% bezogen auf die Gesamtmasse der Schicht B, aufweisen.

Ebenso kann es vorgesehen sein, dass sich die übereinandergestapelten A-B-A Folienschichten in der Art ihres Füllstoffes unterscheiden. So kann es beispielsweise vorgesehen sein, dass eine A-B-A Folienschicht einen Füllstoff wie beispielsweise Talkum aufweist und eine andere A-B-A Folienschicht anorganischen Schäumen, Cellulose und/oder ein Blähmittel als Füllstoff aufweist und sich so die Schichten des Typs B in ihren physikochemischen Eigenschaften wie beispielsweise Dichte, Wärmekapazität oder Härte unterscheiden.

Durch das Vorsehen unterschiedlicher Ausgestaltungen der B-Schichten lässt sich die Gesamteigenschaft des erfindungsgemäßen multilaminaren Kunststoffträgermaterials in weiten Bereichen einstellen und an die erwünschte Eigenschaft eines aus diesem Trägermaterial hergestellten Produktes, wie z.B. einem Dekorpaneel, anpassen.

Gemäß einer weiteren Ausgestaltung der Erfindung kann es vorgesehen sein, dass der thermoplastische Kunststoff der Schicht A ein glykolmodifiziertes Polyethylenterephthalat (PET-G) aufweist. Es hat sich überraschender Weise gezeigt, dass das glykolmodifiziertes PET als Siegel- bzw. Klebeschicht zwischen den A-B-A Schichtverbunden fungieren kann und so zu einer sicheren Anbindung der Schichtverbunde aneinander maßgeblich beiträgt.

Gemäß einer Ausgestaltung der Erfindung kann das PET-G einen Vicat Erweichungspunkt in einem Bereich zwischen ≥63°C und ≤83°C, wie beispielsweise 73°C auf. Die Wärmeformbeständigkeit (A-1,82MPa) kann gemäß einer Ausgestaltung der Erfindung einen Wert in einem Bereich zwischen ≥59°C und ≤79°C, wie beispielsweise 69°C aufweisen. Gemäß einer weiteren Ausgestaltung der Erfindung kann der Wert der Zugfestigkeit des PET-G in einem Bereich zwischen ≥40 MPa und ≤60 MPa, wie beispielsweise bei 50 MPa liegen. Es kann vorgesehen sein, dass der Zugmodul in einem Bereich zwischen ≥1800 MPa und ≤2300 MPa liegt, wie beispielsweise 2010 MPa. Gemäß einer weiteren Ausgestaltung der Erfindung kann es vorgesehen sein, dass die Reißdehnung des PET-G in einem Bereich zwischen ≥100% und ≤150%, wie beispielsweise bei 130%, liegt. Die Charpy Schlagzähigkeit eines PET-G kann gemäß einer weiteren Ausgestaltung in einem Bereich zwischen ≥150 KJ/m² und ≤250 KJ/m² liegen, beispielsweise bei 190 KJ/m²

Gemäß einer bevorzugten Ausgestaltung der Erfindung liegt der Anteil an glykolmodifiziertem Polyethylenterephthalat in einem Bereich zwischen ≥2 Gew.-% und ≤10 Gew.-% bezogen auf den thermoplastischen Kunststoff der Schicht A.

Darüber hinaus kann es vorgesehen sein, dass thermoplastische Kunststoffmaterial der Schicht A weitere Bestandteile wie beispielsweise Flexibilisatoren, Pigmente, Stabilisatoren, Schlagzähigkeitsmodifikatoren, Netzmittel- und/oder Dispergieradditive aufweist.

Erfindungsgemäß kann es vorgesehen sein, dass die Schichtdicke der Schicht B zwischen ≥100% und ≤3000% der Schichtdicke der Schicht A beträgt. Mit anderen Worten, die Schicht B kann die gleiche Schichtstärke aufweisen wie eine Schicht A oder bis zu 30-mal so stark sein wie diese. Insbesondere kann es vorgesehen sein, dass der überwiegende Anteil der Gesamtschichtstärke des Schichtverbundes A-B-A durch die Schicht B bereitgestellt wird. So kann es beispielsweise vorgesehen sein, dass die Schichtstärke der Schicht B ≥50% der Gesamtschichtstärke des Schichtverbundes A-B-A bereitstellt, vorzugsweise ≥60%, insbesondere ≥70% und noch bevorzugter ≥90% der Gesamtschichtstärke.

Es hat sich überraschender Weise gezeigt, dass das Vorsehen von bereits dünnen Schichten A geeignet ist, die Schichtverbunde A-B-A in der Art miteinander zu verbinden, dass ein mechanisch äußerst stabiles multilaminares Kunststoffträgermaterial bereitgestellt werden kann, deren makroskopischen Eigenschaften im Wesentlichen durch die Eigenschaften der Schicht B geprägt sind.

Gemäß einer Ausgestaltung der Erfindung kann ein Schichtverbund A-B-A einen Vicat Erweichungspunkt in einem Bereich zwischen ≥63°C und ≤83°C, wie beispielsweise 73°C aufweisen.

Die Schmelze eines Schichtverbundes A-B-A kann gemäß einer Ausführungsform der Erfindung einen Schmelzflussindex MFI in einem Bereich von ≥130 g/10min und ≤190 g/10min, wie beispielsweise 160 g/10min aufweisen.

Die Wärmeformbeständigkeit (A-1,82 MPa) eines Schichtverbundes kann gemäß einer Ausgestaltung der Erfindung in einem Bereich zwischen ≥55°C und ≤85°C, wie beispielsweise 70°C liegen.

Gemäß einer weiteren Ausgestaltung der Erfindung kann eine Schichtverbundes A-B-A eine Zugfestigkeit in einem Bereich zwischen ≥63 MPa und ≤83 MPa, wie beispielsweise 73 MPa aufweisen. Der Zugmodul eines Schichtverbundes A-B-A kann gemäß einer Ausgestaltung der Erfindung in einem Bereich zwischen ≥3200 MPa und ≤3900 MPa, wie beispielsweise bei 3680 MPa liegen.

Ein Schichtverbund A-B-A kann gemäß einer Ausführungsform der Erfindung eine Reißdehnung in einem Bereich zwischen 2,5% und 3,5%, wie beispielsweise 3,1% aufweisen.

Gemäß einer bevorzugten Ausgestaltung der Erfindung weist das erfindungsgemäße multilaminare Kunststoffträgermaterial einen Schrumpf bei 80°C gemäß ISO 23999 von ≤0.25% auf.

Darüber hinaus betrifft die Erfindung ein Verfahren zur Herstellung eines multilaminaren Kunststoffträgermaterials aufweisend die Schritte:
a) Herstellen eines ersten folienartigen Schichtverbundes mit der Schichtfolge A-B-A, wobei Schicht A einen ersten thermoplastischen Kunststoff aufweist und Schicht B einen zweiten thermoplastischen Kunststoff aufweist;
b) Übereinanderlegen einer Mehrzahl N von ersten folienartigen Schichtverbunden mit der Schichtfolge A-B-A zu einem Schichtstapel, wobei 250 ≥ N ≥ 2, vorzugsweise 200 ≥ N ≥ 3, vorzugsweise 125 ≥ N ≥ 4, noch bevorzugter 100 ≥ N ≥ 5;
c) Verpressen des Schichtstapels unter Einwirkung von Druck und Temperatur; und
d) Abkühlen des verpressten Schichtstapels.

Überraschender Weise hat sich gezeigt, dass ein erfindungsgemäßes multilaminares Kunststoffträgermaterial in einfacher Weise mittels des erfindungsgemäßen Verfahrens hergestellt werden kann, indem zunächst durch einspeisen des ersten und zweiten thermoplastischen Kunststoffs in einen Feedblock und ausbringen der thermoplastischen Kunststoffe über eine Breitschlitzdüse eine Folie mit der Schichtfolge A-B-A hergestellt wird. Die so erhaltene Folie kann anschließend übereinandergelegt werden, wobei jeweils Schichten des Typs A sich gegenüberliegen. Der so erhaltene Folienstapel kann dann unter Einwirkung von Druck und Temperatur zu einem entsprechenden multilaminaren Trägermaterial verbunden werden, wobei die Schichten des Typs A die stoffschlüssige Verbindung zwischen den einzelnen A-B-A Folienschichten sicherstellen.

Insbesondere Vorteilhaft dabei ist, dass die Zielschichtstärke des multilaminaren Kunststoffträgermaterials in einfacher Weise durch die Anzahl der übereinandergelegten und miteinander verbundenen A-B-A Folienschicht eingestellt werden kann.

Dabei ist es auch möglich, unterschiedliche A-B-A Folienschichten übereinander anzuordnen, welche sich zwar in der Art des thermoplastischen Kunststoffs des Typs A gleichen, jedoch beispielsweise in der Ausgestaltung der Schicht B unterscheiden.

Gemäß einer Ausgestaltung der Erfindung kann es insbesondere vorgesehen sein, dass der erste thermoplastische Kunststoff des folienartigen Schichtverbundes mit der Schichtfolge AB-A ein virginaler Kunststoff ist und der zweite Kunststoff ein rezyklierter Kunststoff ist.

Es ist vorgesehen, dass der Prozess zur Herstellung des erfindungsgemäßen multilaminaren Kunststoffträgermaterials sich in zwei Stufen aufteilt. In der ersten wird über eine Coextrudierung mittels Feedblock und Breitschlitzdüse die A-B-A Dreischichtfolie hergestellt. Im zweiten Schritt erfolgt die Laminierung mehrerer Folien zu einer Platte unter Einwirkung von Druck und Temperatur, beispielsweise mittels einer Doppelbandpresse.

Zur Herstellung der Dreischichtfolie mit der Schichtfolge A-B-A kann ein Coextrusionsverfahren genutzt. Zum Einsatz können dabei beispielsweise zwei gleichläufige Doppelschneckenextruder kommen. Ein Hauptextruder kann dabei zur Materialherstellung der Mittellage B genutzt werden und es kann vorgesehen sein, dass dieser zwei Seitenzuführungen aufweist. Diese Seitenzuführungen können der Beimischung von Füllstoffen dienen.

Der zweite Doppelschneckenextruder kann zur Herstellung des thermoplastischen Kunststoffs für die beiden Schichten des Typs A genutzt werden. Auch dieser kann Seitenzuführungen aufweisen, um eine Beimischung von weiteren Bestandteilen zu ermöglichen.

Um ggf. vorhandene Feuchtigkeit und/oder Monomere aus der Polyesterschmelzen im Extruder entfernen zu können kann es vorgesehen sein bei beiden Doppelschneckenextrudern ein Hochvakuumentlüftungssystem zu installieren.

Die Polymerschmelzen von beiden Extrudern können, getrennt voneinander, in einen Feedblock geführt werden. Während die Schmelze aus dem Hauptextruder die Mittelschicht des Typs B bildet, wird das Material aus dem Coextruder nach oberhalb und unterhalb der Mittelschicht geleitet und bildet die Außenlagen des Typs A. Die dreischichtige Schmelze kann anschließend durch eine Breitschlitzdüse geführt werden. Mit dieser wird eine gleichmäßige Schichtverteilung auf der gesamten gewünschten Folienbreite erzielt.

Für den im Anschluss erfolgenden Abkühlprozess können unterschiedliche Varianten zum Einsatz kommen. Die Abkühlung der Schmelze kann beispielsweise über ein Kalanderwalzsystem (Glättwerk) erfolgen. Es kann auch eine Kühlwalze verwendet werden. Dabei können ein Luftmesser und eine Vakuumkammer für ein gleichmäßiges Anliege der Schmelze an der Kühlwalze Sorge tragen. Ein solches Vorgehen ist beispielsweise aus der Herstellung von Cast Folien bekannt.

Gemäß einer weiteren Ausgestaltung der Erfindung kann es vorgesehen sein, dass zumindest ein Teil der folienartigen Schichtverbunde mit der Schichtfolge A-B-A vor einem Übereinanderlegen zu dem Schichtstapel biaxial verstreckt werden. Unter biaxialem Verstrecken im Sinne der Erfindung ist zu verstehen, dass die erhaltenen folienartigen Schichtverbunde mit der Schichtfolge A-B-A in zwei im Wesentlichen orthogonal zueinander orientierten Richtungen gestreckt werden, mithin längs und quer gestreckt werden. Hierdurch kann man die gewünschte Folienstärke (Dicke) erreichen und das Flächengewicht verringern, sowie die mechanischen Eigenschaften z.B. Festigkeitseigenschaften verbessern, die Transparenz erhöhen, die Kältebeständigkeit verbessern und die Gasdurchlässigkeit der Folienschicht vermindern. Insbesondere erhöht sich durch das biaxiale Verstrecken der Folien mit der Schichtfolge A-B-A deren Zugfestigkeit, was einen unmittelbaren Einfluss auf die mechanischen Eigenschaften des letztendlich hergestellten multilaminaren Kunststoffträgermaterials hat.

Das biaxiale Verstrecken kann dabei entweder sequentielle zunächst in einer ersten Richtung und anschließend in einer zweiten Richtung oder simultan in beide Richtungen gleichzeitig erfolgen, wobei eine simultane Verstreckung bevorzugt ist.

Vor einer Abstapelung der folienartigen Schichtverbunde mit der Schichtfolge A-B-A zu einem zu verpressenden Folienstapel kann es erfindungsgemäß vorgesehen sein, dass die Folie einer beidseitigen Corona-Behandlung unterzogen werden. Es hat sich gezeigt, dass das Vorsehen einer Corona-Behandlung zu einem verbesserten Schichtverbund im letztendlichen multilaminaren Kunststoffträgermaterial beiträgt. Die Corona-Behandlung kann dabei unmittelbar nach der Folienherstellung und vor einem Aufwickeln der Folien auf eine Hülse erfolgen, oder unmittelbar vor der Abstapelung der Folien zu einem entsprechenden Folienstapel vor einer Verpressung dieses.

Insoweit bildet der folienartige Schichtverbund mit der Schichtfolge A-B-A ein Halbzeug, welches zwischengelagert werden kann. Eine Lagerung kann bei bevorzugt bei Raumtemperatur und einer Luftfeuchtigkeit von 50% erfolgen. Der folienartige Schichtverbund ist unter diesen Bedingungen beliebig lang lagerfähig.

Ebenso kann es vorgesehen sein, dass der folienartige Schichtverbund mit der Schichtfolge AB-A unmittelbar nach seiner Herstellung zu einem zu verpressenden Schichtstapel abgestapelt wird und das Herstellungsverfahren als in-line Produktionsverfahren ausgelegt ist.

Die dreischichtigen folienartigen Schichtverbunde mit der Schichtfolge A-B-A können abgestapelt bzw. übereinanderliegend über die sich auf der Außenseite befindenden Folienschichten des Typs A in einer bevorzugt isobaren Doppelbandpresse unter Einwirkung von Druck und Temperatur zu einem endlosen Plattenmaterial laminiert werden.

Die zum Einsatz kommende Presse kann beispielsweise eine Vorschubleistung von 20 m/min aufweisen.

Die dreischichtigen folienartigen Schichtverbunde mit der Schichtfolge A-B-A können in einer Station, entsprechend der geforderten Plattendicke und Lagenanordnung, auf Abrollern eingespannt werden. Für den Pressprozess kann eine Vorwärmung der dreischichtigen folienartigen Schichtverbunde mit der Schichtfolge A-B-A auf beispielsweise ≥80 bis ≤135 °C. Geeignete Wärmequellen hierfür können beispielsweise eine erhitze Rolle, Heißluft, ein IR-Strahler, insbesondere ein NIR-Strahler oder ein Mikrowellenstrahler oder eine Kombination dieser sein.

Im Anschluss erfolgt ein Verpressen des Folienstapels bevorzugt in einer Doppelbandpresse. Die Doppelbandpresse kann dabei vorzugsweise mit Stahlbändern ausgerüstet sein.

Die Presszeit kann in ein einem Bereich von ≥0.5 min bis ≤20 min, vorzugsweise in ein einem Bereich von ≥1 min bis ≤50 min, insbesondere ≤2 min liegen.

Der bei der Verpressung vorzusehende Druck kann erfindungsgemäß in einem Bereich von ≥0.5 MPa bis ≤25 MPa, vorzugsweise in einem Bereich von ≥1 MPa bis ≤15 MPa liegen.

Die Zieltemperatur im Kern des Folienstapels kann bevorzugt in einem Bereich zwischen ≥65°C und ≤140 °C, insbesondere in einem Bereich zwischen ≥80°C und ≤120 °C eingestellt werden- Dies sorgt für eine gute Bindung zwischen den einzelnen Folien.

Die fertige Platte bzw. das fertige multilaminare Kunststoffträgermaterial kann anschließend bevorzugt gleichmäßig auf Raumtemperatur abgekühlt werden. Dies erfolgt beispielsweise mit Hilfe einer mit Luft gekühlten Rolle in der Doppelbandpresse. Im Anschluss kann ein Zuschnitt auf Maß und ein Abstapeln erfolgen.

Gemäß einer weiteren Ausgestaltung der Erfindung kann es vorgesehen sein, dass die folienartigen Schichtverbunde mit der Schichtfolge A-B-A bei der Abstapelung zu einem Schichtstapel orthogonal zueinander abgelegt werden. Unter orthogonaler Ablage ist dabei im Sinne der Erfindung zu verstehen, dass die Folien hinsichtlich ihrer Produktionsrichtung, also der Längsrichtung, quer zueinander abgestapelt werden. Hierdurch kann eine weitere Verbesserung der mechanischen Eigenschaften des letztendlichen multilaminaren Kunststoffträgermaterials erreicht werden. Eventuell auftretende herstellungsbedingte Längsspannungen durch die Breitschlitzdüse und das Glättwerk innerhalb der einzelnen folienartigen Schichten mit der Schichtfolge A-B-A werden durch die orthogonale Anordnung kompensiert und führen zu einem anisotropen Werkstoff.

Dabei kann es vorgesehen sein, dass das Verpressen des Folienstapels in einem Batch-Verfahren erfolgt, wobei die Folien orthogonal zueinander ausgerichtet und in einem über eine Presse, wie beispielsweise eine Mehretagenpresse, miteinander laminiert. Es ist verständlich, dass die folienartigen Schichtverbunde mit der Schichtfolge A-B-A hierfür im Vorhinein auf ein spezifisches Maß konfektioniert werden müssen.

Die Presszeit kann in ein einem Bereich von ≥0.5 min bis ≤20 min, vorzugsweise in ein einem Bereich von ≥1 min bis ≤50 min, insbesondere ≤2 min liegen.

Der bei der Verpressung vorzusehende Druck kann erfindungsgemäß in einem Bereich von ≥0.5 MPas bis ≤25 Mpas, vorzugsweise in einem Bereich von ≥1 MPas bis ≤15 Mpas liegen.

Die Zieltemperatur im Kern des Folienstapels kann bevorzugt in einem Bereich zwischen ≥65°C und ≤140 °C, insbesondere in einem Bereich zwischen ≥80°C und ≤120 °C eingestellt werden- Dies sorgt für eine gute Bindung zwischen den einzelnen Folien.

Die fertige Platte bzw. das fertige multilaminare Kunststoffträgermaterial kann anschließend bevorzugt gleichmäßig auf Raumtemperatur abgekühlt werden. Dies erfolgt beispielsweise mit Hilfe einer mit Luft gekühlten Rolle in der Doppelbandpresse. Im Anschluss kann ein ggf. ein weiterer Zuschnitt auf Maß und ein Abstapeln erfolgen.

Die Erfindung betrifft darüber hinaus Dekorpaneel mit einem ein erfindungsgemäßes multilaminares Kunststoffträgermaterial aufweisenden Kern. Ein solches Dekorpaneel kann eine Trägerplatte bzw. einen Kern aus einem entsprechenden multilaminaren Kunststoffträgermaterial, ein auf der Trägerplatte angeordnetes Dekor, sowie eine oberhalb des Dekors angeordnete Deckschicht aufweisen. Mit Bezug auf die spezifischen Merkmale des Kerns wird somit auf die vorstehende Beschreibung verwiesen.

Ferner können die Randbereiche des Paneels strukturiert beziehungsweise profiliert sein, um insbesondere lösbare Verbindungselemente vorzusehen. Diesbezüglich kann bei einer Profilierung im Sinne der Erfindung vorgesehen sein, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Insbesondere bei Nut- und/oder Federprofilen sind dabei elastische Werkstoffe von Vorteil, da durch diese allein derartige Profile erzeugbar sind, welche besonders einfach handhabbar und stabil sind. So sind insbesondere keine weiteren Materialien notwendig, um die Verbindungselemente zu erzeugen. Das multilaminare Kunststoffträgermaterial kann dabei die Bereitstellung von Paneelen ermöglichen, die eine Verbindungsfestigkeit nach ISO 24334 für eine Fugenöffnung von 0,2 mm von ≥ 2,0 kN/m, vorzugsweise von ≥ 4,0 kN/m, in Längsrichtung und von ≥ 2,5 kN/m, vorzugsweise von ≥ 4,5 kN/m, in Querrichtung aufweisen.

Gemäß einer weiteren Ausgestaltung der Erfindung kann es vorgesehen sein, dass das multilaminare Kunststoffträgermaterial im Anschluss an den Verpressungsschritt einem Temper-Schritt bzw. Wärmebehandlungsschritt unterzogen werden. Hierdurch kann vorteilhafter Weise erreicht, dass der Schrumpf des multilaminaren Kunststoffträgermaterials deutlich reduziert wird. Insbesondere kann hierdurch erreicht werden, dass der Schrumpf des multilaminaren Kunststoffmaterials auf einen Wert von ≤0.25% bei 80°C für 6h gemäß ISO 23999 reduziert wird. Unter einem Temperprozess in Sinne der Erfindung ist dabei zu verstehen, dass das verpresste multilaminare Kunststoffträgermaterial auf eine Temperatur ≤ 45°C, vorzugsweise ≤ 40°C, insbesondere ≤ 35°C abgekühlt werden und anschließend auf eine Temperatur oberhalb der Glasübergangstemperatur T_{G} des Kunststoffs des Kunststoffträgermaterial erwärmt werden. Vorzugsweise wird das multilaminare Kunststoffträgermaterial dabei auf eine Temperatur in einem Bereich zwischen ≥ 90°C und ≤ 110°C erwärmt. Gemäß einer Ausgestaltung der Erfindung wird das multilaminare Kunststoffträgermaterial dabei für einen Zeitraum von 0.5 bis 5 Minuten, vorzugsweise 1 bis 4 Minuten, insbesondere 1.5 bis 3 Minuten auf eine Temperatur oberhalb der Glasübergangstemperatur des Kunststoffs, insbesondere auf eine Temperatur in einem Bereich zwischen ≥ 90°C und ≤ 110°C, erwärmt.

Das Erwärmen im Rahmen des zuvor beschriebenen Temperprozesses kann dabei beispielsweise mittels IR-Strahlern, insbesondere mittels NIR-Strahlern (Nah-InfrarotStrahler), Mikrowellenstrahlung oder Kombinationen dieser erfolgen, wobei es insbesondere vorgesehen seien kann, dass eine Bestrahlung mit entsprechenden Strahlern von der Oberseite sowie der Unterseite, vorzugsweise gleichzeitig, des multilaminaren Kunststoffträgermaterials erfolgt.

Der vorsehbare Temper-Schritt kann dabei an einem dem Verpressen des Folienstapels in Schritt c) nachgeordneten beliebigen Punkt erfolgen.

Zur letztendlichen Herstellung eines Dekorpaneels unter Verwendung eines multilaminaren Kunststoffträgermaterials gemäß der vorliegenden Erfindung können die folgenden weiteren Fertigungsschritte vorgesehen sein:
e) gegebenenfalls Aufbringen eines Dekoruntergrunds auf zumindest einen Teilbereich des Trägers;
f) gegebenenfalls Aufbringen eines eine Dekorvorlage nachbildenden Dekors auf zumindest einen Teilbereich des Trägers, und
g) gegebenenfalls Aufbringen einer Schutzschicht auf zumindest einen Teilbereich des Dekors.

Ferner können sich die folgenden Schritte anschließen:
h) Strukturieren der Schutzschicht, und
i) Behandeln des Trägers zur elektrostatischen Entladung und gegebenenfalls zur elektrostatischen Beladung vor wenigstens einem der vorgenannten Verfahrensschritte.

Es konnte überraschender Weise gezeigt werden, dass es durch das vorbeschriebene Verfahren ermöglicht werden kann, eine besonders vorteilhafte Herstellung insbesondere eines Trägers eines Wand- oder Bodenpaneels zu ermöglichen. Dabei kann das Verfahren besonders vorteilhaft sein durch eine Verwendung des Trägermaterials, wie dies vorstehend im Detail beschrieben ist.

Zur Herstellung eines fertigen Paneels kann das Verfahren die weiteren folgenden Verfahrensschritte umfassen, um den Träger mit einem Dekor zu versehen und dieses mit einer Schutzschicht zu beschichten. Dabei werden die nachfolgenden Schritte bevorzugt unmittelbar mit dem erzeugten bahnförmigen Träger oder Kerns durchgeführt. Es ist von der Erfindung jedoch ebenfalls mit umfasst, dass der bahnförmige Träger oder Kern vor einem geeigneten der Verfahrensschritte e) bis g) zunächst in eine Vielzahl plattenförmiger Träger unterteilt wird und/oder der plattenförmigen Träger durch die entsprechend folgenden Verfahrensschritte weiter behandelt wird. Die nachstehenden Erläuterungen gelten für beide Alternativen entsprechend, wobei zur Vereinfachung im Weiteren von einer Behandlung des Trägers gesprochen wird.

Es kann ferner gegebenenfalls zunächst etwa vor dem Verfahrensschritt f) ein Vorbehandeln des Trägers zur elektrostatischen Entladung und gegebenenfalls anschließender elektrostatischer Beladung erfolgen. Dies kann insbesondere dazu dienen, das Auftreten von Unschärfen im Laufe der Dekoraufbringung zu vermeiden.

Gemäß Verfahrensschritt e) kann weiterhin gegebenenfalls ein Dekoruntergrund auf zumindest einen Teilbereich des Trägers aufgebracht werden. Beispielsweise kann zunächst ein Primer insbesondere für Druckverfahren als Dekoruntergrund aufgebracht werden, etwa in einer Dicke von ≥ 10µm bis ≤ 60 µm. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff eingesetzt werden.

Neben der Verwendung eines Primer ist es möglich, das Dekor auf ein mit einem entsprechenden Dekor bedruckbares Dekorpapier aufzubringen, welches etwa mittels einer zuvor auf den Träger aufgebrachten Harzschicht als Verbindungsmittel vorgesehen sein kann. Ein derartiger Druckuntergrund ist sowohl für Flexo-Druck, Offset-Druck oder Siebdruckverfahren, als auch insbesondere für Digitaldrucktechniken, wie beispielsweise Inkjet-Verfahren oder Laserdruck-Verfahren geeignet. Zur Aufbringung der Harzschicht kann es vorzugsweise vorgesehen sein, dass eine Harzzusammensetzung aufgebracht wird, welche als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Dabei kann die Harzzusammensetzung beispielsweise in einer Auftragsmenge zwischen ≥5 g/m² und ≤40 g/m², vorzugsweise ≥10 g/m² und ≤30 g/m² aufgetragen werden. Ferner kann ein Papier oder Vlies mit einer Grammatur zwischen ≥30 g/m² und ≤80 g/m², vorzugsweise zwischen ≥40 g/m² und ≤70 g/m² auf den plattenförmigen Träger aufgebracht.

Darüber hinaus kann es vorgesehen sein, dass Dekor mittels eines teil- oder vollständige bedruckten Dekorfilms oder einer Dekorfolie auf den Träger aufzubringen. Als Dekorfilm bzw. Dekorfolie kann dabei beispielsweise eine mit einem Dekor bedruckte Kunststofffolie auf Basis eines Thermoplastes, wie beispielsweise Polyethylenterephthalat, Polyethylen, Polypropylen, Polystyrol, oder Polyvinylchlorid, sein. Bevorzugt handelt es sich bei dem thermoplastischen Kunststoff um einen solchen, der ein gutes Anbindungsverhalten an das Material der Schicht A hat, so dass die Dekorfolie ohne Aufbringen einer Klebeschicht auf dem Träger thermisch befestigt bzw. auflaminiert werden kann.

Alternativ kann es vorgesehen sein das eine Dekorfolie bzw. ein Dekorfilm mittels eines Lackes, insbesondere mittels eines strahlungshärtbaren Lackes auf ein erfindungsgemäßes Trägermaterial aufgebracht bzw. an diesem befestigt wird.

Weiterhin kann gemäß Verfahrensschritt f) ein Aufbringen eines eine Dekorvorlage nachbildenden Dekors auf zumindest einen Teilbereich des Trägers erfolgen. Dabei kann das Dekor durch den sogenannten Direktdruck aufgebracht werden. Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht beziehungsweise ein Dekoruntergrund verstanden. Es können unterschiedliche Drucktechniken, wie beispielsweise Flexo-Druck, Offset-Druck oder Siebdruck zum Einsatz gelangen. Insbesondere können als Digitaldrucktechniken beispielsweise Inkjet-Verfahren oder Laserdruck-Verfahren eingesetzt werden.

Die Dekorschichten können ferner aus einer insbesondere strahlungshärtbaren Farbe und/oder Tinte ausgebildet werden. Beispielsweise kann eine UV-härtbare Farbe oder Tinte verwendet werden.

Dabei können die Dekorschichten jeweils in einer Dicke in einem Bereich von ≥ 5µm bis ≤ 10µm aufgebracht werden.

Es kann ferner vorgesehen sein, neben einer bezüglich Farbe und/oder Struktur positiven Abbildung ferner auch eine entsprechende negative Abbildung der Dekorvorlage aufzubringen. Im Detail kann, wie es beispielsweise von einem Positiv-Beizen beziehungsweise Negativ-Beizen für Holzwerkstoffe bekannt ist, durch die Verwendung von digitalen Daten der Farbeindruck beispielsweise einer Maserung umgekehrt werden, so dass bezüglich der Farbe beziehungsweise insbesondere helleren und dunkleren Bereichen ein Negativ entsteht. Entsprechendes ist neben dem Farbeindruck ebenfalls für die aufgebrachte Struktur möglich, so dass auch bezüglich der strukturellen Ausgestaltung ein Negativ realisierbar ist. Auch derartige Effekte sind auf Basis digitaler dreidimensionaler Daten problemlos und ohne Vorlaufzeit beziehungsweise Umbauten in einen Herstellungsprozess integrierbar.

Gemäß Verfahrensschritt g) kann ein Aufbringen einer Schutzschicht auf zumindest einen Teilbereich des Dekors vorgesehen sein. Eine derartige Schicht zum Schutz des aufgebrachten Dekors kann insbesondere als Verschleiß- oder Deckschicht oberhalb der Dekorschicht in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt. Beispielsweise kann es vorgesehen sein, dass die Verschleiß- und/oder Deckschicht als vorproduzierte Overlayschicht, etwa basierend auf Melamin, auf den bedruckten Träger aufgelegt und mit diesem durch Druck- und/oder Wärmeeinwirkung verbunden wird. Ferner kann es bevorzugt sein, dass zur Ausbildung der Verschleiß- und/oder Deckschicht ebenfalls eine strahlungshärtbare Zusammensetzung, wie beispielsweise ein strahlungshärtbarer Lack, wie einem Acryllack, aufgebracht wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

Weiterhin kann die Deckschicht zunächst teilgehärtet werden und im Anschluss eine Endlackierung mit einem Urethanacrylat und eine Endhärtung, etwa mit einem Galliumstrahler, durchgeführt werden.

Ferner kann die Deck- und/oder Verschleißschicht Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥0,1 Gew.-% und ≤40,0 Gew.-%, bevorzugt zwischen ≥1,0 Gew.-% und ≤30,0 Gew.-% in der Deck- und/oder Zusammensetzung zur Ausbildung Verschleißschicht enthalten sein.

Des Weiteren kann es vorgesehen sein, dass in die Schutzschicht beziehungsweise Verschleiß- oder Deckschicht eine Strukturierung, insbesondere eine mit dem Dekor übereinstimmende Oberflächenstrukturierung durch das Einbringen von Poren eingebracht wird. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt. Weiterhin kann es vorgesehen sein, dass eine Strukturierung der Dekorpaneele nach dem Auftrag der Deck- und/oder Verschleißschicht erfolgt. Hierzu kann es bevorzugt vorgesehen sein, dass als Deck- und/oder Verschleißschicht eine härtbare Zusammensetzung aufgetragen wird und ein Aushärtungsprozess nur in dem Maße erfolgt, dass lediglich eine Teilhärtung der Deck- und/oder Verschleißschicht erfolgt. In die so teilgehärtete Schicht wird mittels geeigneter Werkzeuge, wie beispielsweise einer Hartmetall-Strukturwalze oder eines Stempels, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Deck- und/oder Verschleißschicht erfolgt eine weitere Härtung der nun strukturierten Deck- und/oder Verschleißschicht.

Dabei kann es auch vorgesehen sein, dass eine Strukturierung der Oberfläche mittels eines Verfahrens zum Herstellen einer Struktur auf einer Oberfläche erzeugt wird, bei welchem zunächst eine flüssige Grundschicht auf die Oberfläche des Werkstückes aufgebracht wird und anschließend eine Vielzahl von Tröpfchen in die noch flüssige Grundschicht in der Weise aufgespritzt werden, dass sich die Schichtdicke der Grundschicht an den Stellen, an denen die Tröpfchen aufgespritzt werden, verändert. Dabei werden durch das Aufspritzen der Tröpfchen in die zuvor aufgetragene, flüssige Grundschicht Vertiefungen in diese eingebracht. Abschließend erfolgt ein Fixieren der flüssigen Grundschicht. Die kann in Abhängigkeit des Grundschichtmaterials thermisch oder mittel elektromagnetischer Strahlung erfolgen.

Darüber hinaus kann auf der der Dekorseite gegenüberliegenden Seite ein Gegenzug aufgebracht werden.

Der zuvor beschriebene Temper-Schritt kann gemäß einer Ausgestaltung der Erfindung insbesondere nach dem zuvor beschriebenen Prozessschritt g) oder h) erfolgen. Insbesondere kann vorgesehen sein, dass eine nach Abschluss des Schritts g) oder h) erhaltene dann dekorierte Platte aufweisend ein erfindungsgemäßes Kunststoffträgermaterial zunächst in der Fläche aufgeteilt wird, um einzelne dekorierte Paneele zu erhalten, die dann einer Profilierung wenigstens zweier der Kanten der Paneele unterzogen werden, um komplementäre Verriegelungsmittels auszubilden, mittels welcher Paneele miteinander verbunden werden können. Ein Temper-Schritt kann dann vorzugsweise erst nach dem Aufteilen und/oder nach dem Profilieren des Paneels erfolgen. Das Vorsehen eines Temper-Schrittes bei einem bereits profilierten Paneel stellt dabei eine besonders bevorzugte Ausgestaltung dar.

Die Erfindung ist nachfolgend anhand der Figuren sowie eines Ausführungsbeispiels weiter erläutert.
Fig.1 zeig eine schematische Darstellung einer Ausgestaltung eines erfindungsgemäßen multilaminaren Kunststoffträgermaterials; und
Fig. 2 illustriert den Verfahrensablauf zur Herstellung eines folienartigen Schichtverbundes mit der Schichtfolge A-B-A für ein einfindungsgemäßes multilaminares Kunststoffträgermaterial.

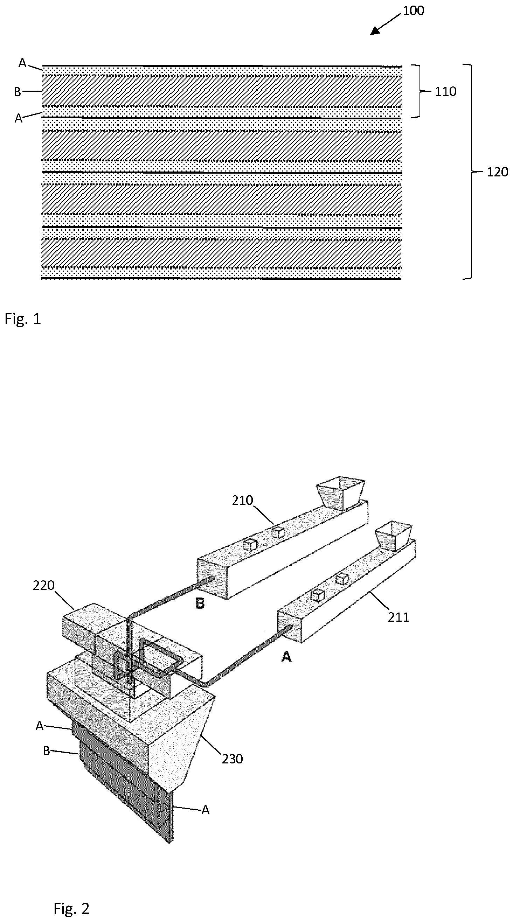

Fig. 1 zeigt eine schematische Darstellung einer Ausgestaltung eines erfindungsgemäßen multilaminaren Kunststoffträgermaterials 100. Das multilaminare Kunststoffmaterial 100 eine Mehrzahl N von Schichtfolgen A-B-A 110 auf. In der gezeigten schematischen Ausführungsform beträgt die Anzahl der Schichtfolgen A-B-A 4 (N = 4). Allgemein kann die Anzahl der Schichtfolgen A-B-A 110 zwischen 3 und 250 liegen (250 ≥ N ≥ 2). Die Schicht A weist einen ersten thermoplastischen Kunststoff und Schicht B weist einen zweiten thermoplastischen Kunststoff auf. Der erste thermoplastische Kunststoff ist bevorzugt ein virginaler Kunststoff ist und der zweite Kunststoff ein rezyklierter Kunststoff. Bevorzugt handelt es sich bei den thermoplastischen Kunststoffen um Polyethylenterephthalate. Diese stehen insbesondere als Rezyklat in großer Menge aus dem Recycling von Lebensmittelverpackungen zur Verfügung. Bevorzugt handelt es sich bei dem thermoplastischen Kunststoff der Schicht A um ein glykolmodifiziertes Polyethylenterephthalat (PET-G). Es hat sich überraschender Weise gezeigt, dass das glykolmodifiziertes PET als Siegel- bzw. Klebeschicht zwischen den A-B-A Schichtverbunden fungieren kann. Die Schichtfolge A-B-A 110 kann insgesamt eine Schichtdicke zwischen 100 µm und 2000 µm aufweisen. Dabei kann es vorgesehen sein, dass die Schichtdicke der Schicht B zwischen ≥100% und ≤3000% der Schichtdicke der Schicht A beträgt. Mit anderen Worten, die Schicht B kann die gleiche Schichtstärke aufweisen wie eine Schicht A oder bis zu 30-mal so stark sein wie diese. Insbesondere kann es vorgesehen sein, dass der überwiegende Anteil der Gesamtschichtstärke des Schichtverbundes A-B-A durch die Schicht B bereitgestellt wird. So kann es beispielsweise vorgesehen sein, dass die Schichtstärke der Schicht B ≥50% der Gesamtschichtstärke des Schichtverbundes A-B-A bereitstellt, vorzugsweise ≥60%, insbesondere ≥70% und noch bevorzugter ≥90% der Gesamtschichtstärke. Bei dem thermoplastischen Kunststoff der Schicht B kann es sich bevorzugt um einen mit Füllstoffen, wie beispielsweise Talkum, modifizierten Kunststoff, insbesondere ein PET, handeln. Das erfindungsgemäße multilaminare Kunststoffträgermaterial 100 kann durch aufeinanderschichten von folienartigen Schichtverbundenen 110 zu einem Folienstapel 120 erfolgen, welcher dann unter Einwirkung von Druck und Temperatur miteinander verpresst wird. Der bei der Verpressung vorzusehende Druck kann erfindungsgemäß in einem Bereich von ≥0.5 MPa bis ≤25 MPa, vorzugsweise in einem Bereich von ≥1 MPa bis ≤15 MPa liegen. Die Zieltemperatur im Kern des Folienstapels kann bevorzugt in einem Bereich zwischen ≥65°C und ≤140 °C, insbesondere in einem Bereich zwischen ≥80°C und ≤120 °C eingestellt werden- Dies sorgt für eine gute Bindung zwischen den einzelnen dreischichtigen folienartigen Schichtverbunde 110. Für den Pressprozess kann eine Vorwärmung der dreischichtigen folienartigen Schichtverbunde 110 auf beispielsweise ≥80 bis ≤135 °C vorgesehen sein. Geeignete Wärmequellen hierfür können beispielsweise eine erhitze Rolle, Heißluft, ein IR-Strahler, insbesondere ein NIR-Strahler oder ein Mikrowellenstrahler oder eine Kombination dieser sein. Die Verpressung kann beispielsweise in einer Doppelbandpresse erfolgen, so dass in einem kontinuierlichen Prozess ein Endlosmaterial erzeugt wird. Vor dem Abstapeln der folienartigen Schichtverbunde 110 zu dem Folienstapel 120 kann es vorgesehen sein, dass die offenliegenden Oberflächen der Schicht A mit einer Corona-Behandlung vorbehandelt werden. Nach der Verpressung des Folienstapel 120 zum erfindungsgemäßen multilaminaren Kunststoffträgermaterial kann dieses abgekühlt und auf ein gewünschtes Maß zugeschnitten werden.

Fig. 2 illustriert den Verfahrensablauf zur Herstellung eines folienartigen Schichtverbundes mit der Schichtfolge A-B-A für ein einfindungsgemäßes multilaminares Kunststoffträgermaterial. Erfindungsgemäß kann es vorgesehen sein, dass ein folienartiger Schichtverbund mit der Schichtfolge A-B-A über eine Coextrudierung mittels eines Feedblocks 220 und Breitschlitzdüse 230 hergestellt. Zum Einsatz können dabei beispielsweise zwei gleichläufige Doppelschneckenextruder 210, 211 kommen. Ein Hauptextruder 210 kann dabei zur Materialherstellung der Mittellage B genutzt werden und es kann vorgesehen sein, dass dieser zwei Seitenzuführungen aufweist. Diese Seitenzuführungen können der Beimischung von Füllstoffen dienen. Der zweite Doppelschneckenextruder 211 kann zur Herstellung des thermoplastischen Kunststoffs für die beiden Schichten des Typs A genutzt werden. Auch dieser kann Seitenzuführungen aufweisen, um eine Beimischung von weiteren Bestandteilen zu ermöglichen. Um ggf. vorhandene Feuchtigkeit und/oder Monomere aus der Polyesterschmelzen im Extruder entfernen zu können kann es vorgesehen sein bei beiden Doppelschneckenextrudern ein Hochvakuumentlüftungssystem zu installieren. Die Polymerschmelzen von beiden Extrudern 210, 211 können, getrennt voneinander, in einen Feedblock 220 geführt werden. Während die Schmelze aus dem Hauptextruder 210 die Mittelschicht des Typs B bildet, wird das Material aus dem Coextruder 211 nach oberhalb und unterhalb der Mittelschicht B geleitet und bildet die Außenlagen des Typs A. Die dreischichtige Schmelze kann anschließend durch eine Breitschlitzdüse 230 geführt werden. Mit dieser wird eine gleichmäßige Schichtverteilung auf der gesamten gewünschten Folienbreite erzielt. Für den im Anschluss erfolgenden Abkühlprozess können unterschiedliche Varianten zum Einsatz kommen. Die Abkühlung der Schmelze kann beispielsweise über ein Kalanderwalzsystem (Glättwerk) erfolgen. Es kann auch eine Kühlwalze verwendet werden. Dabei können ein Luftmesser und eine Vakuumkammer für ein gleichmäßiges Anliege der Schmelze an der Kühlwalze Sorge tragen.

### Bezugszeichenliste

- 100: multilaminares Kunststoffträgermaterial
- 110: folienartiger Schichtverbund mit der Schichtfolge A-B-A
- 120: Folienstapel
- 210: Doppelschneckenextruder / Hauptextruder
- 211: Doppelschneckenextruder / Coextruder
- 220: Feedblock
- 230: Breitschlitzdüse
- A: erste thermoplastische Kunststoffschicht
- B: zweite thermoplastische Kunststoffschicht

## Patentansprüche

1. Multilaminares Kunststoffträgermaterial (100) aufweisend eine Mehrzahl N von Schichtfolgen A-B-A (110), wobei Schicht A einen ersten thermoplastischen Kunststoff aufweist und Schicht B einen zweiten thermoplastischen Kunststoff aufweist und wobei der erste thermoplastische Kunststoff ein virginaler Kunststoff ist und der zweite Kunststoff ein rezyklierter Kunststoff ist, und wobei 250 ≥ N ≥ 2, vorzugsweise 200 ≥ N ≥ 3, vorzugsweise 125 ≥ N ≥ 4, noch bevorzugter 100 ≥ N ≥ 5.

2. Multilaminares Kunststoffträgermaterial gemäß Anspruch 1, wobei der rezyklierte thermoplastische Kunststoff der Schicht B ein amorphes Polyethylenterephthalat (PET) aufweist.

3. Multilaminares Kunststoffträgermaterial gemäß einem der vorhergehenden Ansprüche, wobei das Schicht B neben dem thermoplastischen Kunststoff einen Füllstoff aufweist, wobei der Füllstoff vorzugsweise ausgewählt ist aus der Gruppe bestehend aus Kreide, nicht asbestöses Silikat, vorzugsweise Magnesiumsilikat, Holzmehl, Blähton, Vulkanasche, Bims, Porenbeton, insbesondere anorganischen Schäumen, Cellulose oder ein Blähmittel aufweist.

4. Multilaminares Kunststoffträgermaterial gemäß Anspruch 3, wobei der Anteil an Füllstoff in einem Bereich zwischen ≥1 Gew.-% und ≤60 Gew.-% bezogen auf die Gesamtmasse des die Schicht B bildenden Materials liegt.

5. Multilaminares Kunststoffträgermaterial gemäß einem der vorhergehenden Ansprüche, wobei der thermoplastische Kunststoff der Schicht A ein glykolmodifiziertes Polyethylenterephthalat (PET-G) aufweist.

6. Multilaminares Kunststoffträgermaterial gemäß einem der vorhergehenden Ansprüche, wobei die Schichtdicke der Schicht B zwischen 100% und 3000% der Schichtdicke der Schicht A beträgt.

7. Multilaminares Kunststoffträgermaterial gemäß einem der vorhergehenden Ansprüche, wobei das Kunststoffträgermaterial einen Schrumpf ≤0.25% bei 80°C gemäß ISO 23999 aufweist.

8. Multilaminares Kunststoffträgermaterial gemäß einem der vorhergehenden Ansprüche, wobei zumindest ein Teil der folienartigen Schichtverbunde (110) mit der Schichtfolge A-B-A biaxial verstreckt ist.

9. Verfahren zur Herstellung eines multilaminaren Kunststoffträgermaterials (100) aufweisend die Schritte:
a) Herstellen eines ersten folienartigen Schichtverbundes mit der Schichtfolge A-B-A (110), wobei Schicht A einen ersten thermoplastischen Kunststoff aufweist und Schicht B einen zweiten thermoplastischen Kunststoff aufweist;
b) Übereinanderlegen einer Mehrzahl N von ersten folienartigen Schichtverbunden (110) mit der Schichtfolge A-B-A zu einem Schichtstapel (120), wobei 250 ≥ N ≥ 2, vorzugsweise 200 ≥ N ≥ 3, vorzugsweise 125 ≥ N ≥ 4, noch bevorzugter 100 ≥ N ≥ 5;
c) Verpressen des Schichtstapels (120) unter Einwirkung von Druck und Temperatur; und
d) Abkühlen des verpressten Schichtstapels (120).

10. Verfahren gemäß Anspruch 9, wobei der folienartige Schichtverbund (110) mit der Schichtfolge A-B-A durch einspeisen des ersten und zweiten thermoplastischen Kunststoffs in einen Feedblock (220) und ausbringen über eine Breitschlitzdüse (230) hergestellt wird.

11. Verfahren gemäß einem der Ansprüche 9 und 10, wobei zumindest ein Teil der folienartigen Schichtverbunde (110) mit der Schichtfolge A-B-A vor einem Übereinanderlegen zu dem Schichtstapel (120) biaxial verstreckt werden.

12. Verfahren gemäß einem der Ansprüche 9 bis 11, wobei das multilaminare Kunststoffträgermaterial nach dem Verpressen in Schritt c) auf eine Temperatur ≤ 40°C abgekühlt und anschließend auf eine Temperatur oberhalb der Glasübergangstemperatur des Kunststoffs, insbesondere auf eine Temperatur in einem Bereich zwischen ≥ 90°C und ≤ 110°C, erwärmt wird.

13. Verfahren gemäß Anspruch 12, wobei das multilaminare Kunststoffträgermaterial für einen Zeitraum von 0.5 bis 5 Minuten, vorzugsweise 1 bis 4 Minuten, insbesondere 1.5 bis 3 Minuten auf eine Temperatur oberhalb der Glasübergangstemperatur des Kunststoffs erwärmt wird.

14. Dekorpaneel aufweisend eine Trägerplatte, ein auf der Trägerplatte angeordnetes Dekor, eine oberhalb des Dekors angeordnete Deckschicht sowie optional korrespondierende Verriegelungsmittel an wenigstens zwei Seitenkanten des Panels, **dadurch gekennzeichnet, dass** die Trägerplatte eine multilaminare Trägerplatte nach einem der Ansprüche 1 bis 8 ist und das Dekorpaneel einen Schrumpf ≤0.25% bei 80°C für 6h gemäß ISO 23999 aufweist.

## Claims

1. Multilaminar plastic support material (100) having a plurality N of A-B-A layer sequences (110), wherein the A layer includes a first thermosetting plastic and the B layer includes a second thermosetting plastic, and wherein the first thermosetting plastic is a virgin plastic and the second plastic is a recycled plastic, and wherein 250 ≥ N ≥ 2, preferably 200 ≥ N ≥ 3, preferably 125 ≥ N ≥ 4, still more preferably 100 ≥ N ≥ 5.

2. Multilaminar plastic support material according to Claim 1, wherein the recycled thermosetting plastic of the B layer includes an amorphous polyethylene terephthalate (PET).

3. Multilaminar plastic support material according to one of the preceding claims, wherein the B layer includes a filler material besides the thermosetting plastic, wherein the filler material is preferably selected from the group consisting of chalk, non-asbestos silicate, preferably magnesium silicate, sawdust, expanded clay, volcanic ash, pumice, aerated concrete, in particular includes inorganic foams, cellulose or an expanding agent.

4. Multilaminar plastic support material according to Claim 3, wherein the proportion of filler material is in a range between ≥1 wt% and ≤60 wt% relative to the total weight of the material that forms the B layer.

5. Multilaminar plastic support material according to any one of the preceding claims, wherein the thermosetting plastic of the A layer includes a glycol-modified polyethylene terephthalate (PET-G).

6. Multilaminar plastic support material according to any one of the preceding claims, wherein the layer thickness of the B layer has a value between 100% and 3000% of the layer thickness of the A layer.

7. Multilaminar plastic support material according to any one of the preceding claims, wherein the plastic support material has a shrinkage of ≤0.25% at 80 °C according to ISO 23999.

8. Multilaminar plastic support material according to any one of the preceding claims, wherein at least a part of the film-like multilayer composites (110) with the layer sequence A-B-A is stretched biaxial.

9. Method for producing a multilaminar plastic support material (100) including the steps:
a) Producing a first film-like multilayer composite with the layer sequence A-B-A (110), wherein the A layer contains a first thermosetting plastic, and the B layer contains a second thermosetting plastic;
b) Placing a plurality N of first film-like multilayer composites (110) with the layer sequence A-B-A one on top of the other to form a layer stack (120), wherein 250 ≥ N ≥ 2, preferably 200 ≥ N ≥ 3, preferably 125 ≥ N ≥ 4, more preferably still 100 ≥ N ≥ 5;
c) Compressing the layer stack (120) using the effects of pressure and temperature; and
d) Cooling the compressed layer stack (120).

10. Method according to Claim 9, wherein the film-like multilayer composite (110) with the layer sequence A-B-A is produced by feeding the first and second thermosetting plastics into a feedblock (220) and extruding them through a sheet extrusion die (230).

11. Method according to one of Claims 9 and 10, wherein at least a part of the film-like multilayer composites (110) with the layer sequence A-B-A is stretched biaxially before being placed one on top of the other to form the layer stack (120).

12. Method according to any one of Claims 9 to 11, wherein after the compression in step c) the multilaminar plastic support material is cooled to a temperature ≤ 40 °C and subsequently heated to a temperature above the glass transition temperature of the plastic, in particular to a temperature in a range between ≥ 90 °C and ≤ 110 °C.

13. Method according to Claim 12, wherein the multilaminar plastic support material is heated for a period from 0.5 to 5 minutes, preferably 1 to 4 minutes, in particular 1.5 to 3 minutes to a temperature above the glass transition temperature of the plastic.

14. Decorative panel including a support board, a decoration arranged on the support board, a covering layer arranged over the decoration and optionally corresponding locking means on at least two side edges of the panel, **characterized in that** the support board is a multilaminar support board according to any one of Claims 1 to 8 and the decorative panel undergoes shrinkage ≤0.25% at 80 °C for 6h according to ISO 23999.

## Revendications

1. Matériau de support plastique multi stratifié (100) présentant une multiplicité N de séries de couches A-B-A (110), dans lequel la couche A présente une première matière plastique thermoplastique et la couche B présente une deuxième matière plastique thermoplastique et dans lequel la première matière plastique thermoplastique est une matière plastique vierge et la deuxième matière plastique est une matière plastique recyclée, et dans lequel 250 ≥ N ≥ 2, de préférence 200 ≥ N ≥ 3, de préférence 125 ≥ N ≥ 4, plus préférentiellement 100 ≥ N ≥ 5.

2. Matériau de support plastique multi stratifié selon la revendication 1, dans lequel la matière plastique thermoplastique recyclée de la couche B présente un polyéthylène téréphtalate (PET) amorphe.

3. Matériau de support plastique multi stratifié selon l'une des revendications précédentes, dans lequel la couche B présente une charge en plus de la matière plastique thermoplastique, dans lequel la charge est de préférence choisie dans le groupe constitué de la craie, d'un silicate sans amiante, de préférence du silicate de magnésium, de la farine de bois, de l'argile expansée, de la cendre volcanique, de la pierre ponce, du béton poreux, notamment de mousses inorganiques, de cellulose ou d'un agent gonflant.

4. Matériau de support plastique multi stratifié selon la revendication 3, dans lequel la proportion de la charge se situe dans une plage entre ≥ 1 % en poids et ≤ 60 % en poids, par rapport à la masse totale du matériau formant la couche B.

5. Matériau de support plastique multi stratifié selon l'une des revendications précédentes, dans lequel la matière plastique thermoplastique de la couche A présente un polyéthylène téréphtalate modifié au glycol (PET-G).

6. Matériau de support plastique multi stratifié selon l'une des revendications précédentes, dans lequel l'épaisseur de couche de la couche B se situe entre 100 % et 3000 % par rapport à l'épaisseur de la couche A.

7. Matériau de support plastique multi stratifié selon l'une des revendications précédentes, dans lequel le matériau de support plastique présente un rétrécissement ≤ 0,25 % à 80 °C, selon la norme ISO 23999.

8. Matériau de support plastique multi stratifié selon l'une des revendications précédentes, dans lequel au moins une partie du composite en couches (110) de type film est étirée biaxialement avec la série de couches A-B-A.

9. Procédé de fabrication d'un matériau de support plastique multi stratifié (100) présentant les étapes :
a) de fabrication d'un premier composite en couches de type film avec la série de couches A-B-A (110), dans lequel la couche A présente une première matière plastique thermoplastique et la couche B présente une deuxième matière plastique thermoplastique ;
b) de superposition d'une multiplicité N de premiers composites en couches de type films (110) avec la série de couches A-B-A pour faire un empilement de couches (120), dans lequel 250 ≥ N ≥ 2, de préférence 200 ≥ N ≥ 3, de préférence 125 ≥ N ≥ 4, plus préférentiellement 100 ≥ N ≥ 5 ;
c) de compression de l'empilement de couches (120) sous l'influence d'une pression et d'une température ; et
d) de refroidissement de l'empilement de couches (120) comprimé.

10. Procédé selon la revendication 9, dans lequel le composite en couches (110) de type films avec la série de couches A-B-A est fabriqué par l'approvisionnement de la première et de la deuxième matière plastique thermoplastique dans un bloc d'alimentation (220) et l'extrusion par le biais d'une buse à fente large (230).

11. Procédé selon l'une des revendications 9 et 10, dans lequel au moins une partie du composite en couches (110) de type film avec la série de couches A-B-A est étirée biaxialement avant une superposition pour faire l'empilement en couches (120).

12. Procédé selon l'une des revendications 9 à 11, dans lequel le matériau support plastique multi stratifié est refroidi à une température ≤ 40 °C après la compression dans l'étape c) et est ensuite chauffé à une température au-dessus de la température de transition vitreuse de la matière plastique, notamment jusqu'à une température dans une plage entre ≥ 90 °C et ≤ 110 °C.

13. Procédé selon la revendication 12, dans lequel le matériau support plastique multi stratifié est chauffé pendant un intervalle de temps de 0,5 à 5 minutes, de préférence de 1 à 4 minutes, notamment de 1,5 à 3 minutes, à une température au-dessus de la température de transition vitreuse de la matière plastique.

14. Panneau décoratif présentant une plaque support, un décor disposé sur la plaque support, une couche de recouvrement disposée au-dessus du décor, comme éventuellement des moyens de fixation correspondants sur au moins deux arêtes latérales du panneau, **caractérisé en ce que** la plaque support est une plaque support multi stratifiée selon l'une des revendications 1 à 8 et le panneau décoratif présente un rétrécissement <_ 0,25 % à 80 °C pendant 6 h, selon la norme ISO 23999.
